# FASCICULE DE BREVET EUROPEEN

(11) **EP 3 364 565 B1**
(45) Date de publication et mention de la délivrance du brevet: **02.09.2020**
(21) Numéro de dépôt: 18157382.5
(22) Date de dépôt: 19.02.2018
(51) Int. Cl.: H04B 10/116

(54) **PROCÉDÉS DE COMMUNICATION EN LUMIÈRE VISIBLE**
KOMMUNIKATIONSVERFAHREN ÜBER SICHTBARES LICHT
METHODS FOR VISIBLE-LIGHT COMMUNICATION

(30) Priorité: 17.02.2017 FR 1751302
(43) Date de publication de la demande: 22.08.2018
(73) Titulaire: Rtone, 69550 Amplepluis (FR); Institut National des Sciences Appliquées de Lyon, 69100 Villeurbanne (FR)
(72) Inventeur: DUQUE, Alexis, 69100 VILLEURBANNE (FR); DESPORTES, Adrien, 69003 LYON (FR); STANICA, Razvan, 69100 VILLEURBANNE (FR); RIVANO, Hervé, 69007 LYON (FR)
(74) Mandataire: Regimbeau

(56) Documents cités:
- CORBELLINI GIORGIO ET AL: "Connecting networks of toys and smartphones with visible light communication", IEEE COMMUNICATIONS MAGAZINE, IEEE SERVICE CENTER, PISCATAWAY, US, vol. 52, no. 7, 1 juillet 2014 (2014-07-01), pages 72-78, XP011553392, ISSN: 0163-6804, DOI: 10.1109/MCOM.2014.6852086 [extrait le 2014-07-10]
- DOMENICO GIUSTINIANO ET AL: "Low-complexity Visible Light Networking with LED-to-LED communication", 2012 IFIP WIRELESS DAYS, 1 novembre 2012 (2012-11-01), pages 1-8, XP055485836, DOI: 10.1109/WD.2012.6402861 ISBN: 978-1-4673-4403-6
- LIFANG FENG ET AL: "Fountain code-based error control scheme for dimmable visible light communication systems", OPTICS COMMUNICATIONS, vol. 347, 1 juillet 2015 (2015-07-01), pages 20-24, XP055416076, AMSTERDAM, NL ISSN: 0030-4018, DOI: 10.1016/j.optcom.2015.02.053
- HAO JIE ET AL: "CeilingCast: Energy efficient and location-bound broadcast through LED-camera communication", IEEE INFOCOM 2016 - THE 35TH ANNUAL IEEE INTERNATIONAL CONFERENCE ON COMPUTER COMMUNICATIONS, IEEE, 10 avril 2016 (2016-04-10), pages 1-9, XP032930145, DOI: 10.1109/INFOCOM.2016.7524511
- HAOHUA DU ET AL: "Martian -- message broadcast via LED lights to heterogeneous smartphones", MOBILE COMPUTING AND NETWORKING, ACM, 2 PENN PLAZA, SUITE 701 NEW YORK NY 10121-0701 USA, 3 octobre 2016 (2016-10-03), pages 417-418, XP058280406, DOI: 10.1145/2973750.2985257 ISBN: 978-1-4503-4226-1
- QING WANG ET AL: "OpenVLC", VISIBLE LIGHT COMMUNICATION SYSTEMS, ACM, 2 PENN PLAZA, SUITE 701 NEW YORK NY 10121-0701 USA, 7 septembre 2014 (2014-09-07), pages 15-20, XP058056081, DOI: 10.1145/2643164.2643167 ISBN: 978-1-4503-3067-1

## Description

### DOMAINE TECHNIQUE GENERAL

La présente invention concerne le domaine des objets communicants.

Plus précisément, elle concerne un procédé de communication en lumière visible entre un équipement et un terminal mobile.

### ETAT DE L'ART

L'Internet des Objets (loT pour « Internet of Things ») vise à connecter des « objets connectés » ou « objets communicants », c'est-à-dire des dispositifs de tous types (actuellement des balances, bracelets, éléments d'éclairages, capteurs de température/humidité, télécommandes, boutons, caméras, stations météo, enceintes, etc.) équipés de moyens de communication réseau et adaptés pour transmettre et quelque fois recevoir des données.

Ces divers objets connectés sont le plus souvent connectés à un terminal mobile de type smartphone ou un boitier d'accès à internet, vers lequel ils font remonter des données.

Pour cela, de façon classique, un réseau sans fil (par exemple de type Bluetooth) est établi par l'équipement contrôleur, et les objets connectés se connectent à ce réseau. De façon préférée, en particulier lorsque le réseau est établi par un terminal mobile, le réseau établi est aujourd'hui plus précisément de type « Bluetooth Low Energy » (BLE).

Le BLE, également appelé Bluetooth Smart ou encore Bluetooth 4.0, est une évolution du Bluetooth qui a pour vocation d'être utilisé dans des applications à fortes contraintes énergétiques.

Cela s'avère essentiel, car la plupart des objets connectés fonctionnent sur batterie, cette dernière étant souvent de petite taille (pour ne pas alourdir l'objet), et difficile, voire impossible, à charger/changer. On trouve ainsi des objets connectés « minimalistes » tels que des capteurs industriels avec une batterie non rechargeable d'une durée de vie de plusieurs années.

Le BLE apporte donc satisfaction pour les objets connectés, mais on constate qu'avec la simplification à l'extrême des objets connectés, le coût financier et énergétique d'un module BLE devient de moins en moins négligeable par rapport à celui de base de l'objet.

Partant du constat que les équipements utilisables comme objets connectés intègrent quasiment toujours des DEL (diodes électroluminescentes, LED en anglais) pour faciliter l'interaction humaine, il a été proposé de mettre en œuvre des technologies dites VLC, « Visible Light Communication », i.e. communication en utilisant la lumière visible (au lieu des ondes radio).

Comme expliqué par exemple dans la publication C. Danakis, M. Afgani, G. Povey, I. Underwood, and H. Haas, "Using a CMOS camera sensor for visible light communication", Proc. IEEE Globecom Workshops, 2012, une DEL d'un objet peut émettre des données sous la forme d'un signal lumineux à destination de la caméra du terminal mobile, grâce au phénomène de « Rolling Shutter » qui enregistre une image par déroulement. Est ainsi acquise une sorte de « code-barre » (image formée d'une alternance de bandes lumineuses et de bandes sombres), à partir duquel une application du terminal permet de reconstruire les données. Un autre procédé de communication par lumière visible est divulgué dans G. Corbellini et al, "Connecting Networks of Toys and Smartphones with Visible Light Communication", IEEE, 2014.

Par rapport à un module BLE, une DEL basique est quasiment gratuite (0.05$ contre 1$), souvent déjà présente dans l'objet, et d'une consommation énergétique dérisoire.

Cependant, le principal inconvénient est le rapport signal/bruit très élevé dû à la nature du signal (interférence de la lumière ambiante - naturelle ou générée par d'autres sources lumineuses), qui implique d'orienter précisément la caméra vers la diode et de limiter la distance entre les deux appareils, sous peine d'une explosion du taux de pertes des paquets.

Pour lutter contre cela, ont été proposés plusieurs mécanismes de redondance. Dans le document D. Camps-Mur, J. Paradells-Aspas, J. Ferrandiz-Lahuerta, D. Camps-Mur, and J. Paradells-Aspas. "A reliable asynchronous protocol for VLC communications based on the rolling shutter effect", 2015 IEEE Global Communications Conférence (GLOBECOM), pages 1-6, dec 2015, est décrite une stratégie dans laquelle chaque paquet est répété plusieurs fois à la suite, pour augmenter la probabilité que l'une de ces fois soit pleinement saisie. Il est également possible de répéter des séquences complètes de paquets. On constate ainsi que répéter quatre fois les paquets assure une probabilité de succès de plus de 95%, mais divise mathématiquement le débit par quatre. Une vitesse de transfert maximale de 700 bit/s est ainsi atteinte.

Alternativement, il a été proposé dans le document J. Hao, Y. Yang, and J. Luo. CeilingCast: Energy Efficient and Location-Bound Broadcast Through LED-Camera Communication une technique dite de « codage réseau » consistant à diviser le message à transmettre en une pluralité de « segments » (en anglais des « chunks ») de même taille, dépendant linéairement les uns des autres. Plus précisément, chaque segment contient un peu d'informations des autres segments. Quand le terminal mobile reçoit assez de segments, il peut retrouver le message initial en résolvant le système linéaire créé par les dépendances linéaires des segments les uns avec les autres. Cette technique évite de devoir répéter les paquets (un paquet perdu peut être reconstitué à partir des segments), mais limite tout de même le débit puisque des informations de contrôle doivent être transmises avec chaque paquets. De plus, cette technique nécessite la mise en œuvre de traitements informatiques des données aussi bien du côté receveur (terminal mobile) que du côté émetteur (objet connecté), ce qui n'est pas toujours possible pour les objets connectés basiques qui ne sont souvent équipés que d'un microcontrôleur rudimentaire et premier prix. De plus, ces traitements informatiques, s'ils peuvent être faits, entrainent une hausse de la consommation énergétique.

Dans cette publication, un débit de 1.35 kbit/s est atteint, mais on note que les DEL utilisées sont des éclairages pour plafond, et non les DEL ordinaires de contrôle.

Il serait ainsi souhaitable de disposer d'une solution de communication en lumière visible entre un objet connecté basique et un terminal mobile qui résolve le problème des pertes de paquets de façon à augmenter le débit sans augmenter la consommation énergétique.

Il serait également souhaitable que cette solution soit la moins intrusive possible de sorte à limiter les coûts de la technologie VLC et permettre sa mise en œuvre de façon universelle, y compris avec les DEL basiques que l'on trouve sur tous les équipements.

### PRESENTATION DE L'INVENTION

La présente invention se rapporte ainsi selon un premier aspect à un procédé de communication en lumière visible entre un équipement comprenant des moyens de traitement de données et une diode électroluminescente et un terminal mobile comprenant des moyens de traitement de données, des moyens d'acquisition optique et un flash, le procédé étant caractérisé en ce qu'il comprend la mise en œuvre d'étapes de :
(a) Emission par la diode électroluminescente d'au moins un premier signal lumineux représentatif d'une première donnée ;
(b) Acquisition dudit premier signal lumineux par les moyens d'acquisition optique, et tentative de reconstitution par les moyens de traitement de donnée du terminal mobile de ladite première donnée ;
(c) Génération par les moyens de traitement de donnée du terminal mobile d'une deuxième donnée en fonction du résultat de la reconstitution de la première donnée ;
(d) Emission par le flash d'un deuxième signal lumineux représentatif de la deuxième donnée ;
(e) Détection par les moyens de traitement de données de l'équipement d'un courant inverse produit par la diode électroluminescente sous l'effet dudit deuxième signal lumineux.

Selon d'autres caractéristiques avantageuses et non limitatives :
- le premier signal lumineux est acquis à l'étape (b) sous la forme d'une image de la diode électroluminescente, la première donnée étant reconstituée par analyse de l'image acquise ;
- le premier signal lumineux est acquis par les moyens d'acquisition optique grâce à un effet de « Rolling Shutter » ;
- les moyens d'acquisition optique consistent en un capteur de type Complementary Metal Oxide Semi-conductor ;
- l'équipement comprend au moins un capteur d'une grandeur physique, l'étape (a) comprenant la génération préalable de ladite première donnée par les moyens de traitement de données de l'équipement à partir d'une mesure de la grandeur physique par le capteur ;
- l'équipement comprend uniquement comme composants électroniques les moyens de traitement de données, la ou les diodes électroluminescentes, le ou les capteurs, et des moyens d'alimentation électrique ;
- l'étape (e) comprend la reconstitution par les moyens de traitement de donnée de l'équipement de ladite deuxième donnée ;
- les étapes (c) à (e) sont mises en œuvre uniquement si les moyens de traitement de donnée du terminal mobile parviennent à reconstituer la première donnée à l'étape (b) ;
- l'étape (a) comprend la répétition de l'émission du premier signal représentatif de la première donnée jusqu'à ce que l'étape (e) soit mise en œuvre ;
- l'étape (a) comprend la génération préalable d'un ensemble de segments linéairement dépendants à partir de la première donnée, et l'émission successive d'une pluralité de premiers signaux chacun représentatif d'un segment dudit ensemble de segments jusqu'à ce que l'étape (e) soit mise en œuvre, l'étape (b) comprenant l'acquisition de chaque premier signal lumineux par les moyens d'acquisition optique, la tentative de reconstitution par les moyens de traitement de donnée du terminal mobile de chaque segment, et la reconstruction de ladite première donnée lorsque suffisamment de segments one été correctement reconstruits ;
- la deuxième donnée est une notification du résultat de la tentative de reconstitution de ladite première donnée à l'étape (b) ;
- ladite première donnée comprend un ensemble de paquets, l'étape (a) comprenant l'émission successive d'une pluralité de premiers signaux chacun représentatif d'un paquet dudit ensemble de paquets, l'étape (b) comprenant l'acquisition de chaque premier signal lumineux par les moyens d'acquisition optique et la tentative de reconstitution par les moyens de traitement de donnée du terminal mobile de chaque paquet, la deuxième donnée étant une liste des paquets non reconstitués ou une notification de reconstitution de tous les paquets ;
- le procédé comprend suite à l'étape (e), si la deuxième donnée est une liste d'au moins un paquet, la répétition du procédé pour les paquets listés ;
le procédé comprend une étape (a0) préalable d'émission par le flash d'un troisième signal lumineux représentatif d'une requête d'émission de la première donnée, et de détection par les moyens de traitement de données de l'équipement d'un courant inverse produit par la diode électroluminescente sous l'effet dudit troisième signal lumineux.

Selon un deuxième aspect, l'invention concerne un système comprenant au moins un équipement et un terminal mobile configurés pour mettre en œuvre le procédé selon le premier aspect de communication en lumière visible

Selon un troisième et un quatrième aspect, l'invention concerne un produit programme d'ordinateur comprenant des instructions de code pour l'exécution d'un procédé selon le premier aspect de communication en lumière visible ; et un moyen de stockage lisible par un équipement informatique sur lequel un produit programme d'ordinateur comprend des instructions de code pour l'exécution d'un procédé selon le premier aspect de l'invention de communication en lumière visible.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture pour la mise en œuvre du procédé selon l'invention ;
- la figure 2 illustre la mise en œuvre du procédé selon l'invention entre un équipement et un terminal mobile ;
- la figure 3 est un logigramme illustrant la gestion de modes de fonctionnement dans un mode de réalisation préféré du procédé selon l'invention.

### DESCRIPTION DETAILLEE

### Architecture

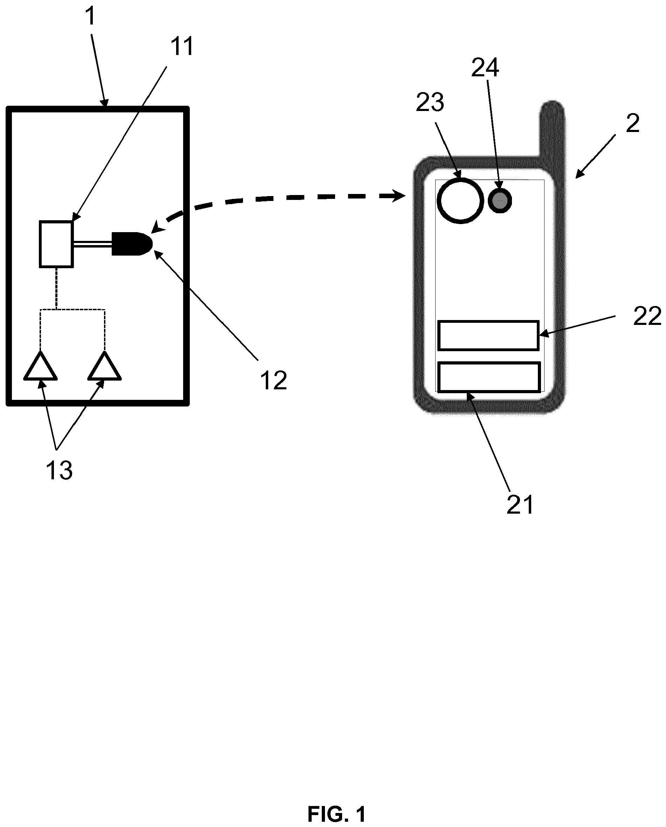

En référence aux dessins et en particulier à la **figure 1****,** l'invention concerne un procédé de communication en lumière visible (VLC) entre un équipement 1 et un terminal mobile 2. Par communication en lumière visible, on entend l'échange des signaux lumineux. On définit comme signal lumineux la modulation d'une caractéristique lumineuse, en particulier l'intensité, de sorte à coder une donnée. Ainsi, dans le mode de réalisation préféré qui sera décrit, un signal lumineux est une séquence de fragments d'intensité lumineuse forte ou faible, l'intensité faible étant généralement l'intensité nulle, i.e. absence d'émission.

L'équipement 1 comprend des moyens de traitement de données 11 (typiquement un microcontrôleur basique de type MCU) et au moins une diode électroluminescente 12 (DEL, souvent de couleur). Comme l'on verra plus, il s'agit de DEL « régulières », c'est-à-dire des DEL de faible puissance (moins de 1W), de technologie conventionnelle (pas d'OLED par exemple), uniquement destinées à produire de la lumière lorsque exposées à courant électrique (à des fins de contrôle par un utilisateur humain du fonctionnement de l'équipement 1), et telles qu'on peut trouver partout pour des prix de quelques centimes. Elles sont en l'état, n'ayant fait l'objet d'aucune modification (pas d'amélioration du substrat, etc.).

Par contraste, bien que l'on connaisse par exemple des DEL évoluées à technologie nanotige (« Nanorod LEDs ») qui peuvent se charger grâce à la lumière ambiante, on comprendra qu'un homme du métier ne considèrera jamais ce type DEL dans le cadre du présent procédé car bien trop chères et trop rares pour avoir le moindre intérêt économique dans des applications de communication VLC en IoT.

Dans un mode de réalisation préféré qui sera décrit plus loin, les moyens de traitement de données 11 présentent un mode de fonctionnement normal dit « actif » et un mode de fonctionnement dégradé dit « veille » dans lequel la consommation énergétique est réduite.

En mode dégradé, les horloges et périphériques des moyens de traitement 11 sont en particulier désactivées de sorte à obtenir cette réduction de la consommation. On note qu'on connait de nombreux MCU implémentant de base un tel mode dégradé appelé « low-power ».

L'équipement 1 est préférentiellement un objet communiquant simple, en particulier équipé en outre d'au moins un capteur 13 d'une grandeur physique, c'est-à-dire destiné à faire remonter des données de mesure. Il comprend également des moyens d'alimentation électrique, en particulier une batterie (rechargeable ou non).

De façon préférée, l'objet communiquant ne comprend pas de capteur optique de type photodiode (on verra pourquoi plus loin), voire est minimaliste, c'est-à-dire qu'il ne comprend aucun autre composant électronique que les moyens de traitement de données 11 (éventuellement équipés d'un bouton), la ou les DEL 12, le ou les capteurs 13, et les moyens d'alimentation électrique, de sorte à limiter son prix et sa consommation électrique au maximum. On note que l'équipement 1 peut alternativement être tout objet électronique basique équipé d'au moins une DEL 12 de contrôle, sans qu'il soit nécessaire de le modifier physiquement. De façon générale l'équipement 1 et ses composants sont les plus simples et moins chers possibles.

Le terminal mobile 2 est un équipement « maître » vers lequel l'équipement 1 va faire remonter ses données. Il s'agit typiquement d'un terminal mobile de type Smartphone ou tablette tactile, et de façon générale un équipement comprenant des moyens de traitement de données 21 (un processeur), avantageusement des moyens de stockage de données 22 (une mémoire, typiquement un disque dur ou un disque flash), des moyens d'acquisition optique 23 (typiquement la « caméra » du terminal mobile 2, c'est-à-dire un appareil photo numérique intégré. Il peut y en avoir deux : un devant - du côté de l'écran - et un derrière. C'est ce dernier qui nous intéresse car il permet d'utiliser l'écran pour viser la DEL 12) et un flash 24 (une « torche », c'est-à-dire une source lumineuse de relativement forte puissance destinée à la base à illuminer une scène prise en photo par les moyens 23). On note que le terminal peut lui aussi être en l'état, et n'a besoin de faire l'objet d'aucune modification (en particulier non « rooté »).

Comme expliqué dans l'introduction, les moyens d'acquisition optique 23 mettent préférentiellement en œuvre un mécanisme d'acquisition d'image de type « Rolling Shutter » (en français littéralement obturateur déroulant), c'est-à-dire une technique de lecture ligne par ligne (ou colonne par colonne) des pixels. C'est par exemple directement le cas si les moyens 23 consistent en un capteur CMOS (« Complementary Metal Oxide Semiconductor »). Alternativement, les moyens 23 peuvent utiliser un capteur d'une autre technologie exposant l'intégralité de la surface photosensible en une seule fois (par exemple CCD « Charge Coupled Device »), mais couplé par exemple à un obturateur mécanique.

### Principe de l'invention

Une possibilité pour régler tous les problèmes de pertes de paquets serait la mise en place d'une liaison bidirectionnelle entre l'équipement 1 et le terminal mobile 2, en particulier à des fins de feedback.

On sait en effet par exemple envoyer des données en VLC depuis un terminal mobile en utilisant son flash, en particulier à destination d'une photodiode équipant un distributeur automatique de billets. Cela est décrit dans les documents V. Devi, S. D. Raj, M. Divya, S. S. Fathima, and S. Thomas. Replacing ATM Card with Smartphone LED Flash Light. International Journal of Engineering and Future Technology, 6(6):69-75, 2016 ; L. Fan, Q. Liu, C. Jiang, H. Xu, J. Hu, D. Luo, Z. He, and Q. Huang. Visible light communication using the flash light LED of the smart phone as a light source and its application in the access control system. In 2016 IEEE MTT-S International Wireless Symposium (IWS), pages 1-4. IEEE, mar 2016 ; ou M. M. Galal, H. A. Fayed, A. A. E. Aziz, and M. H. Aly. Smartphones for Payments and Withdrawals Utilizing Embedded LED Flashlight for High Speed Data Transmission. In 2013 Fifth International Conférence on Computational Intelligence, Communication Systems and Networks, pages 63-66. IEEE, jun 2013.

Ces techniques permettent un débit de l'ordre de 500 bit/s.

Toutefois, on constate que la transposition de cette solution à des objets communicants basiques pour obtenir une liaison bidirectionnelle n'est pas envisageable.

Plus précisément, non seulement il serait nécessaire d'équiper l'équipement 1 d'une photodiode (ceux en présentant de série étant très rares, contrairement aux DEL), mais en plus on constate que pour remplir convenablement un rôle de récepteur VLC, la photodiode nécessiterait un composant additionnel appelé amplificateur transimpédance (TIA), et des filtres analogiques. Le coût et la consommation énergétique supplémentaires annuleraient tout intérêt du VLC, c'est pourquoi les acteurs du VLC se sont tournés vers les techniques de redondance.

Comme l'on va voir, de façon très astucieuse le présent procédé de communication en lumière visible permet une liaison bidirectionnelle entre le terminal mobile 1 et l'équipement 2 sans la nécessité d'utiliser une photodiode ou tout autre composant électronique, ce qui règle très astucieusement tous les problèmes de pertes de paquets grâce à la possibilité sans coût supplémentaire (financier ou énergétique) de feedback.

### Diode électroluminescente

Le présent procédé n'a besoin que de la DEL 12 du côté équipement 1. Il exploite simplement le phénomène qui fait qu'une DEL régulière peut dans une certaine mesure présenter des propriétés de photo-détection lorsque polarisée en inverse.

Dans ces conditions, sous l'effet de la lumière incidente la DEL génère un très faible courant inverse. Dans la mesure où une DEL n'est pas une photodiode, les moyens de traitement de données 11 de l'équipement 1 ne peuvent pas en déduire l'intensité lumineuse.

Comme expliqué dans le document D. Giustiniano, N. O. Tippenhauer, and S. Mangold. Low-complexity Visible Light Networking with LED-to-LED communication. IFIP Wireless Days, 2012, il est possible de tirer avantage de la capacitance intrinsèque caractéristique des DEL, et du fait que la lumière incidente crée un courant qui réduit le temps de décharge de la DEL. Ainsi, en chargeant une DEL polarisée en inverse, et en mesurant la tension à ses bornes un court instant après sa charge, des variations de l'intensité lumineuse incidente peuvent être détectées. Plus précisément, si la tension est encore élevée c'est que la charge s'est maintenue et qu'il n'y a pas ou peu de courant inverse, alors que si la tension est faible c'est que la DEL s'est déchargée et donc qu'il y a eu existence d'un courant inverse supplémentaire à cause du flash. En d'autres termes, en mesurant la tension au bon moment, on peut savoir si le courant inverse a eu lieu.

Par exemple, une DEL ayant une durée de décharge complète de 600 µs en conditions normales (lumière naturelle) ne se décharge plus qu'en 100 µs sous un éclairage additionnel.

Il est ainsi possible d'utiliser la DEL à la fois comme émetteur dans une liaison DEL-caméra, et récepteur dans une liaison flash-DEL.

En pratique, la réception d'un signal lumineux consiste en l'enchainement de cycles de charge-décharge-mesure de tension présentant une période prédéterminée T1 (i.e. la durée entre le même point de deux cycles - deux charges, deux décharges ou deux mesures successives - est égale à T1). A chaque cycle, on compare le voltage mesuré avec un seuil S :
- si la tension est au-dessus du seuil S c'est qu'il n'y a pas de courant inverse, ou pas significativement (décharge lente), et donc que la luminosité est « faible », i.e. luminosité ambiante. On considère alors qu'un bit « 0 » est reçu.
- si la tension est en-dessous du seuil S c'est qu'il y a un courant inverse significatif (décharge rapide), et donc que la luminosité est « forte », i.e. luminosité du flash. On considère alors qu'un bit « 1 » est reçu.

Le seuil S permet de discriminer une situation avec flash d'une situation sans flash et dépend des conditions de luminosité ambiantes. Par exemple, pour une LED de 3V en journée normale, il peut être de 2.3V. Le seuil S peut soit être prédéfini en fonction des conditions dans lesquelles l'équipement 1 va opérer, ou évoluer dynamiquement pour tenir compte de la variation de luminosité comme l'on verra plus loin.

On comprend que la durée entre la charge et la mesure de tension (i.e. la durée de la décharge) est prédéterminée et non-nulle (il est important de laisser la DEL se décharger pour détecter efficacement l'existence du courant inverse) et qu'il n'y a en aucun cas une mesure en continu de la tension. De surcroit, aucun suivi de la valeur de la tension au cours du temps n'est mis en œuvre.

La charge est très brève (typiquement sur 1 µs), et la mesure de tension est réalisée avec une décharge par exemple de l'ordre de 50 à 150µs, en particulier entre 60 et 100µs. Ensuite, on attend la décharge complète sur quelques centaines de microsecondes à quelques millisecondes supplémentaires. Ainsi, la période T1 totale est avantageusement de l'ordre de quelques millisecondes à quelques dizaines de millisecondes (environ 1 à 50 ms, préférentiellement autour de 10 ms).

A noter qu'on peut envisager un temps de décharge plus long (par exemple 500 µs) à l'issue duquel on est sûr que la DEL sera déchargée en cas de courant inverse, mais encore légèrement chargée en l'absence de celui-ci. Il suffit alors de vérifier si la tension est nulle ou pas pour savoir dans quel cas on est, ce qui est le mode de réalisation le plus basique.

Ce principe de fonctionnement apparait très avantageux pour deux raisons :
- on note que le transfert de données entre un flash et une DEL n'offre qu'un débit extrêmement faible, de l'ordre de 30 bit/s, dans la mesure où ces composants ne sont respectivement conçus ni pour émettre des informations ni pour en recevoir, mais comme l'on verra toutefois plus loin l'objectif est de n'utiliser ce canal retour que pour du feedback et non de la transmission d'informations, ce qui fait qu'un tel débit apparait largement suffisant.
- L'essentiel de la consommation est déportée sur le terminal mobile 2 via le flash 24 (ce qui n'est pas grave puisqu'il peut être rechargé facilement), la consommation énergétique d'une DEL en réception étant quasiment nulle puisqu'elle est éteinte. La seule dépense énergétique au niveau de l'équipement 1 est due à la brève charge (typiquement sur 1 µs), ce qui fait que la consommation moyenne est bien inférieure à 1 mW pour une DEL de couleur basique (à comparer avec une consommation de près de 20 mW pour un module BLE en réception).

### Procédé

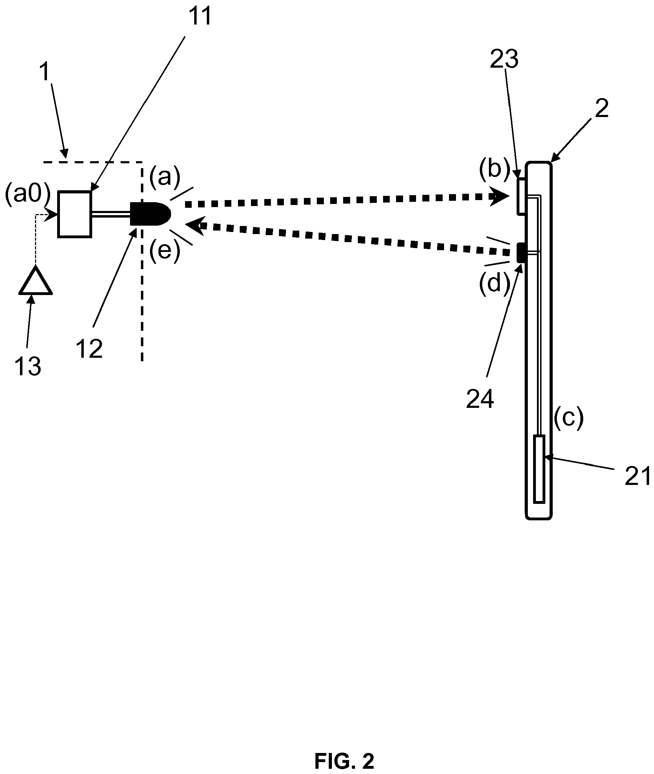

Comme représenté par la **figure 2****,** le présent procédé commence par une étape (a) d'émission par la DEL 12 d'un premier signal lumineux représentatif d'une première donnée (sous le contrôle des moyens de traitement de données 11 de l'équipement 1).

Si l'équipement 1 comprend au moins un capteur 13 d'une grandeur physique, cette première donnée peut représenter une mesure de la grandeur physique par le capteur 13, et alors l'étape (a) comprend avantageusement la génération de ladite première donnée par les moyens de traitement de données 11 de l'équipement 1 à partir de la mesure (i.e. le signal transmis par le capteur 13 aux moyens de traitement de données 11).

Dans une étape (b), la transmission dudit premier signal vers le terminal mobile 2 est mise en œuvre. On suppose que l'utilisateur a orienté convenablement le terminal mobile 2 vers la DEL 12, au besoin en s'aidant de l'écran.

L'étape (b) comprend tout d'abord l'acquisition dudit premier signal lumineux par les moyens d'acquisition optique 23. Comme expliqué, le premier signal lumineux est préférentiellement acquis sous la forme d'une image de la DEL 12, en particulier grâce à l'effet de « Rolling Shutter », lequel est par exemple obtenu si les moyens d'acquisition optique 23 consistent en un capteur de type CMOS. On comprendra toutefois que l'invention n'est pas limitée à cette technique et que l'homme du métier saura acquérir de diverses façons le premier signal lumineux.

L'étape (b) comprend ensuite la tentative de reconstitution par les moyens de traitement de donnée 21 du terminal mobile 2 de ladite première donnée. Dans le mode de réalisation où le premier signal lumineux est préférentiellement acquis sous la forme d'une image de la DEL 12, la première donnée est reconstituée par analyse de l'image acquise. Par exemple, l'effet Rolling Shutter produira une pluralité de bandes lumineuses ou sombres qui codent pour la première donnée. On comprendra que cette partie de l'étape (b) est une tentative, cela signifiant qu'elle n'est pas forcément toujours couronnée de succès. Plus précisément, comme expliqué, le taux de pertes en VLC est assez élevé, et il est possible que l'image acquise ne soit pas exploitable, en d'autres termes que les moyens de traitement tentent de reconstituer la première donnée sans y parvenir, ou n'obtiennent qu'une version dégradée/partielle de la première donnée.

Les moyens de traitement de donnée 21 du terminal mobile 2 peuvent alors générer dans une étape (c) une deuxième donnée en fonction du résultat de la reconstitution de la première donnée, en particulier à des fins de feedback. Diverses stratégies avantageuses seront décrites plus loin. De façon générale, comme l'on verra, soit la deuxième donnée n'est générée que lorsque la première donnée est correctement reconstituée, soit également (elle prend alors une valeur différente) lorsque la première donnée n'est pas reconstituée ou reconstituée que partiellement.

Lorsque la première donnée est correctement reconstituée, la deuxième donnée peut être vue comme un accusé de réception. Elle peut alors être générique, ou être également fonction de la première donnée. Par exemple, la deuxième donnée peut comprend une empreinte (un « hash ») de la première donnée de sorte à désigner explicitement la première donnée pour laquelle la bonne réception est accusée, et éviter les erreurs.

Dans une étape (d), le flash 24 du terminal mobile 2 émet (en réponse au premier signal lumineux) un deuxième signal lumineux représentatif de la deuxième donnée (sous le contrôle des moyens de traitement de données 21 du terminal 2). L'étape (d) a lieu généralement au plus tard quelques dixièmes de secondes après l'étape (b), on suppose que le terminal mobile est toujours orienté convenablement vers la DEL 12.

Ainsi, une étape (e) voit la détection par les moyens de traitement de données 11 de l'équipement 1 d'un courant inverse produit par la diode électroluminescente 12 sous l'effet dudit deuxième signal lumineux.

De façon préférée, l'étape (e) comprend ensuite la reconstitution par les moyens de traitement de donnée 11 de l'équipement 1 de ladite deuxième donnée. L'homme du métier saura, comme expliqué avant, donner aux moyens de traitement de données 11 la capacité de percevoir l'intensité lumineuse reçue, par exemple en mesurant le temps de décharge de la DEL lorsque polarisée en inverse.

Pour cela, comme expliqué, la détection par les moyens de traitement de données 11 de l'équipement 1 d'un courant inverse produit par la diode électroluminescente 12 comprend avantageusement la mise en œuvre d'un cycle de charge de la diode électroluminescente 12, décharge de la diode électroluminescente 12 pendant une durée déterminée, mesure de la tension aux bornes de la diode électroluminescente, et comparaison avec un seuil.

Pour reconstituer la deuxième donnée, le cycle est mis en œuvre périodiquement de sorte à présenter une période T1. En d'autres termes, on enchaîne rapidement les cycles de sorte à obtenir une séquence de bits formant la deuxième donnée.

Alternativement, on peut envisager que le simple fait de recevoir une deuxième donnée est un accusé de bonne réception de la part des moyens de traitements de données 21 du terminal mobile 2.

### Stratégie de feedback

De façon générale, la donnée générée par les moyens de traitement 21 du terminal 2 est un feedback, c'est-à-dire une représentative du succès ou non de la tentative de reconstitution de la première donnée.

Cela signifie que la taille des deuxièmes données sera toujours bien plus faible que la taille des premières données. En d'autres termes, l'utilisation du canal bidirectionnelle sera clairement asymétrique. Une telle utilisation est ainsi parfaitement compatible avec les débits très faibles (30 bit/s) possibles dans le sens flash vers DEL. Comme l'on va voir, dans le sens DEL vers caméra l'utilisation du feedback permet de diminuer sensiblement le recours à la redondance et ainsi d'augmenter le débit : on dépasse 1kbit/s dans tous les cas, avec des pointes à près de 2 kbit/s en utilisant les stratégies optimales, ce qui est nettement supérieur à tous les débits jusque-là obtenus.

Dans un premier mode de réalisation naïf déjà évoqué, la deuxième donnée n'est générée qu'en cas de succès de la reconstitution de la deuxième donnée (en d'autres termes la deuxième donnée est un accusé de réception de la première donnée), c'est-à-dire que les étapes (c) à (e) sont mises en œuvre uniquement si les moyens de traitement de donnée 21 du terminal mobile 2 parviennent à reconstituer la première donnée à l'étape (b).

Plus précisément, dans une stratégie de redondance simple (dit RP pour « redondance paquet ») où chaque première donnée est un paquet, l'étape (a) comprend avantageusement la répétition de l'émission du premier signal représentatif de la première donnée jusqu'à ce que l'étape (e) soit mise en œuvre. En d'autres termes, la première donnée est émise en boucle et lorsque la réception de la deuxième donnée est détectée par les moyens de traitement de données 11 de l'équipement 1 à l'étape (e), ceux-ci stoppent la répétition (et passent le cas échéant au paquet suivant, c'est-à-dire remettent en œuvre le procédé pour une nouvelle première donnée correspondant au paquet suivant). On voit ici que chaque paquet n'est envoyé que le nombre minimal de fois, d'où l'accroissement sensible du débit.

On peut envisager un principe inverse, pour une efficacité comparable : la deuxième donnée n'est générée qu'en cas d'échec de la reconstitution de la première donnée (en d'autres termes la deuxième donnée est une notification de non-reconstitution de la première donnée, c'est-à-dire une notification d'erreur), c'est-à-dire que les étapes (c) à (e) sont mises en œuvre uniquement si les moyens de traitement de donnée 21 du terminal mobile 2 ne parviennent pas à reconstituer la première donnée à l'étape (b). En cas de mise en œuvre de l'étape (e), les moyens de traitement de données 11 de l'équipement 1 savent que le terminal 2 n'a pas réussi à récupérer la première donnée, et ils relancent le procédé. Sinon on passe au paquet suivant.

Dans une variante du premier mode de réalisation, basé sur une stratégie un peu plus complexe de « codage réseau » précédemment évoquée, on peut travailler sur des « chunks », c'est-à-dire des segments linéairement dépendants qui peuvent être générés de manière préalable dans l'étape (a) à partir de la première donnée.

L'émission de la première donnée à l'étape (a) comprend alors plus précisément l'émission successive d'une pluralité de premiers signaux chacun représentatif d'un segment dudit ensemble de segments jusqu'à ce que l'étape (e) soit mise en œuvre.

Par conséquent, l'étape (b) comprend l'acquisition de chaque premier signal lumineux par les moyens d'acquisition optique 23, la tentative de reconstitution par les moyens de traitement de donnée 21 du terminal mobile 2 de chaque segment, et la reconstruction de ladite première donnée lorsque suffisamment de segments one été correctement reconstruits.

En d'autres termes, des segments sont émis continûment, et lorsque la réception de la deuxième donnée est détectée par les moyens de traitement de données 11 de l'équipement 1 à l'étape (e), c'est-à-dire lorsque les moyens de traitement 21 du terminal 2 ont reconstitué correctement suffisamment de segments pour résoudre le système linéaire et reconstituer la première donnée, ceux-ci interrompent l'émission.

Une telle stratégie est la plus efficace en termes de débit car elle limite le nombre de deuxièmes signaux à envoyer à un (alors que dans la première stratégie il en fallait un par paquet), ce qui diminue sensiblement le temps global nécessaire à la transmission du fait du débit très faible dans le sens flash-vers-DEL.

Dans un second mode de réalisation, la deuxième donnée est plus généralement une notification du résultat de la tentative de reconstitution de ladite première donnée à l'étape (b). En d'autres la deuxième donnée peut toujours être un accusé de réception de la première donnée, mais alternativement être une notification de non-reconstitution de la première donnée, et le cas échéant de reconstitution partielle de la première donnée.

Ce mode de réalisation permet une stratégie de redondance dite RS (pour « redondance séquence »), dans laquelle on tente d'émettre à la suite tous les paquets. Ladite première donnée peut alors être vue comme l'ensemble de paquets, l'étape (a) comprenant l'émission successive d'une pluralité de premiers signaux chacun représentatif d'un paquet dudit ensemble de paquets, et l'étape (b) comprenant l'acquisition de chaque premier signal lumineux par les moyens d'acquisition optique 23 et la tentative de reconstitution par les moyens de traitement de donnée 21 du terminal mobile 2 de chaque paquet.

L'étape (c) est préférentiellement toujours mise en œuvre dès que la reconstitution du dernier paquet est tentée dans cette stratégie. La deuxième donnée est alors une liste des paquets non reconstitués ou une notification de reconstitution de tous les paquets.

Le procédé comprenant alors avantageusement suite à l'étape (e), si la deuxième donnée est une liste d'au moins un paquet, la répétition du procédé pour les paquets listés. En d'autres termes, on génère une nouvelle première donnée qui ne comprend que les paquets non reconstitués, et on retente leur transmission, et ce jusqu'à recevoir une notification de reconstitution de tous les paquets.

Cette stratégie présente un débit plus faible, car plusieurs deuxièmes données peuvent avoir à être envoyés, mais elle apparait optimale en termes de nombre de paquets envoyés par l'équipement 1 et de sollicitation de ses moyens de traitement de données 11 (puisque ces derniers n'ont pas à mettre en œuvre les traitements nécessaires à la génération des segments linéairement dépendants), et donc en termes de consommation énergétique. En effet, on rappelle que la DEL 12 en « réception » ne consomme quasiment rien (hormis 1µs de charge) puisqu'elle est éteinte.

Le second mode de réalisation peut également être utilisé pour faire du feedback plus fin, en particulier pour adapter les paramètres de transmission en fonction de ce feedback. Par exemple, en fonction de la ou les deuxièmes données reçues, la stratégie peut être changée pour la prochaine première donnée à transmettre.

### Requête d'émission

Le canal flash-vers-DEL peut avantageusement également servir à requérir l'initiation du procédé.

Plus précisément, ce dernier peut comprendre une étape (a0) préalable d'émission par le flash 24 d'un troisième signal lumineux représentatif d'une troisième donnée (une requête d'émission de la première donnée), et de détection par les moyens de traitement de données 11 de l'équipement 1 d'un courant inverse produit par la diode électroluminescente 12 sous l'effet dudit troisième signal lumineux.

Cela permet d'éteindre la DEL 12 la plupart du temps, et de ne l'allumer qu'en cas de réception de la troisième donnée pour minimiser encore plus la consommation.

On note que la troisième donnée peut être identique ou très similaire à la deuxième donnée.

### Mode veille

Comme expliqué, l'étape (d) suit généralement très rapidement l'étape (b), et l'équipement 1 s'attend ainsi à devoir mettre en œuvre l'étape (e).

Par contre, dans le cas d'une mise en œuvre de l'étape (a0), celle-ci est inattendue.

Par conséquent, les moyens de traitement de données 11 doivent mettre en permanence la détection d'un courant inverse produit par la diode électroluminescente 12, i.e. mettre en œuvre comme expliqué un cycle de charge-décharge-mesure de la tension, en particulier à la période prédéterminée T1. Cela signifie qu'à chaque période T1 les moyens de traitement 11 doivent consommer l'énergie nécessaire à la charge de la LED 12. Bien qu'une telle énergie soit très faible, vu que T1 est avantageusement de l'ordre de quelques millisecondes, la répétition de cette charge pendant des heures entraîne quand même une certaine consommation inutile qu'il est souhaitable d'éviter.

Ainsi selon une disposition particulière, ledit cycle présente une période variable entre la période normale T1 et au moins une deuxième période T0 sensiblement supérieure à T1. Préférentiellement T0 est au moins cinquante fois supérieure à T1, voire cent fois. Ainsi, si T1 est entre 1 et 50 ms, T0 est entre 0.1 et 5s.

On comprendra que la première période T1 permet l'acquisition d'un signal lumineux (le deuxième ou le troisième), i.e. elle est suffisamment courte pour percevoir les différences d'intensité lumineuse dans le signal et permettre de reconstituer la donnée correspondante. Au contraire, la deuxième période T0 ne permet pas l'acquisition d'un signal lumineux, i.e. ne permet pas de détecter la granularité du signal et donc de reconstituer la donnée. Par contre, elle est suffisamment courte pour détecter l'occurrence d'une forte hausse de la luminosité comme le flash.

Ainsi, on prévoit avantageusement deux modes de fonctionnement de l'équipement 1 : un mode actif dans lequel le cycle présente la première période T1 permettant l'acquisition d'un signal lumineux, et au moins un mode veille dans lequel le cycle présente la deuxième période T0.

A noter qu'il peut y avoir deuxièmes périodes T0 de plus en plus longues, i.e. des niveaux de plus en plus profonde (par exemple pour la nuit).

Par ailleurs, comme expliqué dans le mode veille les moyens de traitement de données 11 de l'équipement 1 peuvent présenter en outre un fonctionnement dégradé avec une consommation énergétique réduite.

En mode dégradé, les horloges et périphériques des moyens de traitement 11 sont en particulier désactivées de sorte à obtenir cette réduction de la consommation. Le réveil peut faire via un Low-Power Timer ou la RTC (Real Time Clock).

Cette disposition est particulièrement avantageuse, car la mesure de la luminosité est moins énergivore que l'analyse d'un signal lumineux reçu. Ainsi le dispositif n'est pas en permanence en attente d'un signal, mais ne se prépare à recevoir à analyser un signal que lorsqu'il y a effectivement une émission dudit signal. Ainsi, l'étape (a0) qui constitue l'essentiel du temps de vie de l'équipement 1 présente une consommation encore très fortement réduite.

En particulier, si la période augmente d'un facteur cent, le nombre de charges de la DEL 12 diminue du même facteur cent. En combinant cela avec l'utilisation en outre d'un mode dégradé des moyens 11, on constate que la consommation peut être divisée par cinquante, d'om une augmentation forte de la durée de vie de l'équipement 1.

De façon pratique, le procédé comprend la sélection d'un mode de fonctionnement entre le mode actif et le mode veille. En particulier, les moyens de traitement 11 peuvent si certaines conditions sont validées provoquer le basculement d'un mode à l'autre.

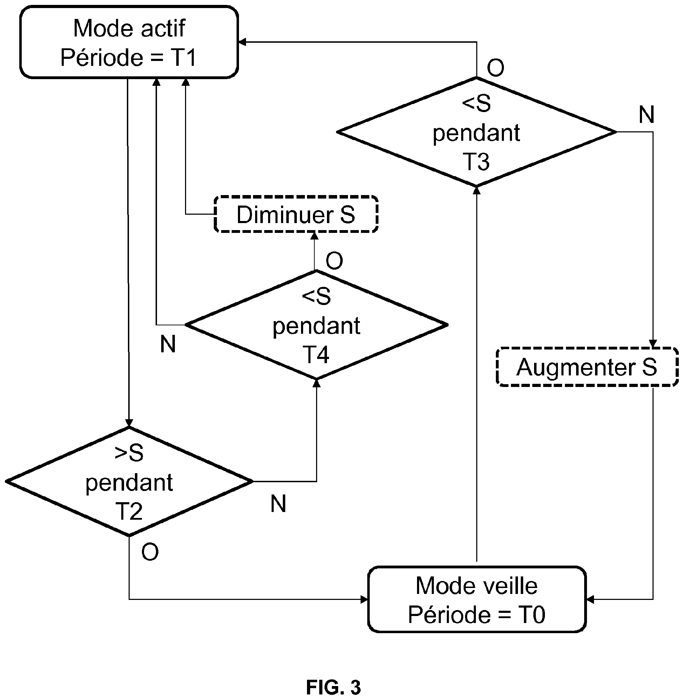

En particulier, en référence à la **figure 3****,**le mode de fonctionnement est avantageusement changé pour le mode veille si pendant une première durée prédéterminée T2 la tension mesurée aux bornes de la diode électroluminescente 12 est supérieure audit seuil (i.e. on détecte une luminosité faible en continu pendant T2), et le mode de fonctionnement est avantageusement changé pour le mode actif si pendant une deuxième durée prédéterminée T3 la tension mesurée aux bornes de la diode électroluminescente 12 est inférieure audit seuil (i.e. on détecte une luminosité forte en continu pendant T3). Pour le retour au mode actif, la vérification de la durée T3 permet d'éviter de faux positifs et de l'hystérésis.

T2 et T3 sont choisis supérieurs à T0, et peuvent être de l'ordre de quelques secondes, par exemple 2s. A noter qu'on peut prévoir plusieurs périodes T0 encore plus longues (par exemple pour une veille profonde de nuit), et alors définir un T2 spécifique beaucoup plus long, par exemple une heure.

De façon particulièrement préféré, comme cela est également visible sur la figure 3, le seuil S est mis à jour dynamiquement en fonction des valeurs de tension mesurées. Cela permet de maximiser l'utilisation du mode de veille malgré la variation de l'invention lumineuse ambiante. En effet, si un utilisateur ouvrait les volets et mettait la DEL 12 au soleil, alors l'équipement 1 pourrait rester inutilement en mode actif. De plus cela permet d'optimiser en permanence la finesse de la détection.

Ainsi, le seuil S est ajusté à la valeur mesurée (éventuellement abaissée d'une marge de sécurité) si, dans le mode actif, pendant une troisième durée prédéterminée T4 (toujours avantageusement de l'ordre de quelques secondes) la tension mesurée aux bornes de la diode électroluminescente 12 est inférieure audit seuil. En effet, si dans le mode actif on détecte en permanence une intensité forte, c'est que cette intensité est celle de la luminosité ambiante et que le seuil S est trop haut. Une fois que le seuil S est ainsi diminué, alors à nouveau la tension mesurée aux bornes de la diode électroluminescente 12 va être supérieure audit seuil, et on va se rediriger vers le mode veille (puisque T2 commence)

A noter que, de façon avantageuse, pendant la période T4 un procédé de filtrage est mis en œuvre pour détecter du clignotement haute fréquence (par exemple les variations rapides d'éclairage liées au dimming de DELs d'éclairage ou du bruit) qui n'a rien à voir avec un signal lumineux attendu. Ainsi, malgré le clignotement, on considèrera que la luminosité est forte en permanence et que la tension est égale à celle des moments de luminosité maximale, i.e. la tension minimale, et le seuil pourra être abaissé.

Pendant le mode veille, la tension reste mesurée à intervalles réguliers et il est possible de progressivement refaire augmenter la valeur du seuil S s'il y a un écart important, de sorte à « recalibrer » la sensibilité et permettre une sortie de veille sans faute même si le flash est alors déclenché dans un environnement beaucoup plus sombre qu'avant. On peut prévoir par exemple que le seuil de rapproche de plus en plus (il augmente) de la valeur moyenne des tensions mesurées pendant le mode veille à une marge de sécurité. On comprendra qu'il est alors possible qu'une variation de luminosité (par exemple allumage d'une lampe) entraîne un rebasculement en mode actif, mais du fait d'absence de signal l'équipement rebasculera en quelques secondes en mode veille soit par fin de l'épisode de luminosité forte, soit par diminution du seuil S.

On constate ainsi que dans ce mode de réalisation le seuil S fait des cycles de variations à la hausse et la baisse pour optimiser à la fois optimal entre sensibilité et consommation énergétique.

### Système

Selon un deuxième aspect, l'invention concerne en particulier le système composé d'au moins un équipement 1 et un terminal mobile 2, configurés pour mettre en œuvre le procédé selon le premier aspect de communication en lumière visible

Comme expliqué précédemment, le ou les équipements 1 comprennent des moyens de traitement de données 11 et une DEL 12 adaptée pour émettre un premier signal lumineux représentatif d'une première donnée, et produit un courant inverse sous l'effet d'un deuxième signal lumineux représentatif d'une deuxième donnée.

Le terminal 2 comprend des moyens de traitement de données 21, des moyens d'acquisition optique 23 adaptés pour capter le premier signal lumineux, et un flash adapter pour émettre le deuxième signal lumineux.

Les moyens de traitement de données 11 du terminal 1 sont configurés pour détecter le courant inverse produit par la DEL 12 sous l'effet dudit deuxième signal lumineux (voire reconstituer la deuxième donnée).

Les moyens de traitement de données 21 du terminal 2 peuvent être configurés pour tenter de reconstituer la première donnée, générer la deuxième donnée en fonction du résultat de la reconstitution de la première donnée.

### Produit programme d'ordinateur

Selon un troisième et un quatrième aspects, l'invention concerne un produit programme d'ordinateur comprenant des instructions de code pour l'exécution (sur des moyens de traitement de données 11, 21 de l'équipement 1 et du terminal 2) d'un procédé de communication en lumière visible selon le premier aspect de l'invention, ainsi que des moyens de stockage lisibles par un équipement informatique (par exemple des moyens de stockage de données 22 du terminal 2 ou une mémoire interne des moyens de traitement de données 11 de l'équipement 1) sur lequel on trouve ce produit programme d'ordinateur.

## Revendications

1. Procédé de communication en lumière visible entre un équipement (1) comprenant des moyens de traitement de données (11) et une diode électroluminescente (12) et un terminal mobile (2) comprenant des moyens de traitement de données (21), des moyens d'acquisition optique (23) et un flash (24), le procédé étant **caractérisé en ce qu'**il comprend la mise en œuvre d'étapes de :
(a) Emission par la diode électroluminescente (12) d'au moins un premier signal lumineux représentatif d'une première donnée ;
(b) Acquisition dudit premier signal lumineux par les moyens d'acquisition optique (23), et tentative de reconstitution par les moyens de traitement de donnée (21) du terminal mobile (2) de ladite première donnée ;
(c) Génération par les moyens de traitement de donnée (21) du terminal mobile (2) d'une deuxième donnée en fonction du résultat de la reconstitution de la première donnée ;
(d) Emission par le flash (24) d'un deuxième signal lumineux représentatif de la deuxième donnée ;
(e) Détection par les moyens de traitement de données (11) de l'équipement (1) d'un courant inverse produit par la diode électroluminescente (12) sous l'effet dudit deuxième signal lumineux ;
le procédé comprenant la mise en œuvre périodique d'un cycle de charge de la diode électroluminescente (12), décharge de la diode électroluminescente (12) pendant une durée déterminée, mesure de la tension aux bornes de la diode électroluminescente (12), et comparaison avec un seuil ; de sorte à détecter ledit courant inverse, ledit cycle présentant une période variable, le procédé comprenant la sélection d'un mode de fonctionnement entre un mode actif dans lequel le cycle présente une première période T1 permettant l'acquisition d'un signal lumineux, et au moins un mode veille dans lequel le cycle présente une deuxième période T0 sensiblement supérieure à la première période.

2. Procédé selon la revendication 1, dans lequel le premier signal lumineux est acquis à l'étape (b) sous la forme d'une image de la diode électroluminescente (12), la première donnée étant reconstituée par analyse de l'image acquise, grâce à un effet de « Rolling Shutter », les moyens d'acquisition optique (23) consistant en particulier en un capteur de type Complementary Metal Oxide Semi-conductor.

3. Procédé selon l'une des revendications 1 à 2, dans lequel l'équipement (1) comprend au moins un capteur (13) d'une grandeur physique, l'étape (a) comprenant la génération préalable de ladite première donnée par les moyens de traitement de données (11) de l'équipement (1) à partir d'une mesure de la grandeur physique par le capteur (13).

4. Procédé selon la revendication 3, dans lequel l'équipement (1) comprend uniquement comme composants électroniques les moyens de traitement de données (11), la ou les diodes électroluminescentes (12), le ou les capteurs (13), et des moyens d'alimentation électrique.

5. Procédé selon l'une des revendications 1 à 4, dans lequel l'étape (e) comprend la reconstitution par les moyens de traitement de donnée (11) de l'équipement (1) de ladite deuxième donnée, les étapes (c) à (e) étant mises en œuvre uniquement si les moyens de traitement de donnée (21) du terminal mobile (2) parviennent à reconstituer la première donnée à l'étape (b).

6. Procédé selon la revendication 5, dans lequel
- soit l'étape (a) comprend la répétition de l'émission du premier signal représentatif de la première donnée jusqu'à ce que l'étape (e) soit mise en œuvre ;
- soit l'étape (a) comprend la génération préalable d'un ensemble de segments linéairement dépendants à partir de la première donnée, et l'émission successive d'une pluralité de premiers signaux chacun représentatif d'un segment dudit ensemble de segments jusqu'à ce que l'étape (e) soit mise en œuvre, l'étape (b) comprenant l'acquisition de chaque premier signal lumineux par les moyens d'acquisition optique (23), la tentative de reconstitution par les moyens de traitement de donnée (21) du terminal mobile (2) de chaque segment, et la reconstruction de ladite première donnée lorsque suffisamment de segments one été correctement reconstruits.

7. Procédé selon la revendication 6, dans laquelle la deuxième donnée est une notification du résultat de la tentative de reconstitution de ladite première donnée à l'étape (b).

8. Procédé selon la revendication 7, dans laquelle ladite première donnée comprend un ensemble de paquets, l'étape (a) comprenant l'émission successive d'une pluralité de premiers signaux, chacun représentatif d'un paquet dudit ensemble de paquets, l'étape (b) comprenant l'acquisition de chaque premier signal lumineux par les moyens d'acquisition optique (23) et la tentative de reconstitution par les moyens de traitement de donnée (21) du terminal mobile (2) de chaque paquet, la deuxième donnée étant une liste des paquets non reconstitués ou une notification de reconstitution de tous les paquets, et le procédé comprenant suite à l'étape (e), si la deuxième donnée est une liste d'au moins un paquet, la répétition du procédé pour les paquets listés.

9. Procédé selon l'une des revendications 1 à 8, comprenant une étape (a0) préalable d'émission par le flash (24) d'un troisième signal lumineux représentatif d'une requête d'émission de la première donnée, et de détection par les moyens de traitement de données (11) de l'équipement (1) d'un courant inverse produit par la diode électroluminescente (12) sous l'effet dudit troisième signal lumineux.

10. Procédé selon l'une des revendications 1 à 9, dans lequel dans le mode veille les moyens de traitement de données (11) de l'équipement (1) présentent en outre un fonctionnement dégradé avec une consommation énergétique réduite.

11. Procédé selon l'une des revendications 1 à 10, dans lequel le mode de fonctionnement est changé pour le mode veille si pendant une première durée prédéterminée T2 la tension mesurée aux bornes de la diode électroluminescente (12) est supérieure audit seuil, et le mode de fonctionnement est changé pour le mode actif si pendant une deuxième durée prédéterminée T3 la tension mesurée aux bornes de la diode électroluminescente (12) est inférieure audit seuil.

12. Procédé selon l'une des revendications 1 à 11, dans lequel ledit seuil est mis à jour au cours de temps en fonction des valeurs de tension mesurées.

13. Système comprenant au moins un équipement (1) et un terminal mobile (2) configurés pour mettre en œuvre le procédé selon l'une des revendications 1 à 12 de communication en lumière visible.

14. Produit programme d'ordinateur comprenant des instructions de code pour l'exécution d'un procédé selon l'une des revendications 1 à 12 de communication en lumière visible, lorsqu'il est exécuté par le système de la revendication 13.

15. Moyen de stockage lisible par un équipement informatique sur lequel un produit programme d'ordinateur comprend des instructions de code pour l'exécution d'un procédé selon l'une des revendications 1 à 12 de communication en lumière visible, lorsqu'il est exécuté par le système de la revendication 13.

## Patentansprüche

1. Kommunikationsverfahren über sichtbares Licht zwischen einer Ausrüstung (1), umfassend Datenverarbeitungsmittel (11) und eine Leuchtdiode (12) und einem mobilen Endgerät (2), umfassend Datenverarbeitungsmittel (21), optische Erfassungsmittel (23) und einen Blitz (24), wobei das Verfahren **dadurch gekennzeichnet ist, dass** es die Durchführung der folgenden Schritte umfasst:
(a) Senden, durch die Leuchtdiode (12), mindestens eines ersten Lichtsignals, das für ein erstes Datenelement repräsentativ ist;
(b) Erfassen des ersten Lichtsignals durch die optischen Erfassungsmittel (23) und Wiederherstellungsversuch, durch die Datenverarbeitungsmittel (21) des mobilen Endgeräts (2), des ersten Datenelements;
(c) Erzeugen, durch die Datenverarbeitungsmittel (21) des mobilen Endgeräts (2), eines zweiten Datenelements in Abhängigkeit vom Ergebnis der Wiederherstellung des ersten Datenelements;
(d) Senden, durch den Blitz (24), eines zweiten Lichtsignals, das für das zweite Datenelement repräsentativ ist;
(e) Ermitteln, durch die Datenverarbeitungsmittel (11) der Ausrüstung (1), eines inversen Stroms, der von der Leuchtdiode (12) aufgrund der Wirkung des zweiten Lichtsignals produziert wird;
wobei das Verfahren die periodische Durchführung eines Zyklus des Ladens der Leuchtdiode (12), Entladens der Leuchtdiode (12) während einer vorher festgelegten Dauer, Messens der Spannung an den Klemmen der Leuchtdiode (12) und Vergleichens mit einem Grenzwert umfasst, so dass der inverse Strom ermittelt wird, wobei der Zyklus eine variable Periode aufweist, wobei das Verfahren die Auswahl eines Betriebsmodus zwischen einem aktiven Modus, in dem der Zyklus eine erste Periode T1 aufweist, die das Erfassen eines Lichtsignals erlaubt, und mindestens einen Bereitschaftsmodus, in dem der Zyklus eine zweite Periode T0 aufweist, die im Wesentlichen größer als die erste Periode ist.

2. Verfahren nach Anspruch 1, wobei das erste Lichtsignal in Schritt (b) in Form eines Bildes der Leuchtdiode (12) erfasst wird, wobei das erste Datenelement durch Analyse des erfassten Bildes dank eines "Rolling Shutter"-Effekts wiederhergestellt wird, wobei die optischen Erfassungsmittel (23) insbesondere aus einem Sensor vom Typ Complementary Metal Oxide Semi-conductor bestehen.

3. Verfahren nach einem der Ansprüche 1 bis 2, wobei die Ausrüstung (1) mindestens einen Sensor (13) einer physikalischen Größe umfasst, wobei der Schritt (a) die vorherige Erzeugung des ersten Datenelements durch die Datenverarbeitungsmittel (11) der Ausrüstung (1) ausgehend von einer Messung der physikalischen Größe durch den Sensor (13) umfasst.

4. Verfahren nach Anspruch 3, wobei die Ausrüstung (1) nur als elektronische Bauteile nur die Datenverarbeitungsmittel (11), die Leuchtdiode(n) (12), den oder die Sensoren (13) und elektrische Versorgungsmittel umfasst.

5. Verfahren nach einem der Ansprüche 1 bis 4, wobei der Schritt (e) die Wiederherstellung, durch die Datenverarbeitungsmittel (11) der Ausrüstung (1), des zweiten Datenelements umfasst, wobei die Schritte (c) bis (e) nur durchgeführt werden, wenn es den Datenverarbeitungsmitteln (21) des mobilen Endgeräts (2) gelingt, das erste Datenelement in Schritt (b) wiederherzustellen.

6. Verfahren nach Anspruch 5, wobei
- entweder der Schritt (a) die Wiederholung des Sendens des ersten Signals umfasst, das für das erste Datenelement repräsentativ ist, bis der Schritt (e) durchgeführt wird;
- oder der Schritt (a) das vorherige Erzeugen einer Einheit von linear abhängigen Segmenten ausgehend vom ersten Datenelement und das schrittweise Senden einer Vielzahl erster Signale, die jeweils für ein Segment der ersten Segmenteinheit repräsentativ sind, umfasst, bis der Schritt (e) durchgeführt wird, wobei der Schritt (b) das Erfassen jedes ersten Lichtsignals durch die optischen Erfassungsmittel (23), den Wiederherstellungsversuch, durch die Datenverarbeitungsmittel (21) des mobilen Endgeräts (2), jedes Segments und die Wiederherstellung des ersten Datenelements umfasst, wenn genug Segmente richtig wiederhergestellt wurden.

7. Verfahren nach Anspruch 6, wobei das zweite Datenelement eine Mitteilung des Ergebnisses des Wiederherstellungsversuchs des ersten Datenelements in Schritt (b) ist.

8. Verfahren nach Anspruch 7, wobei das erste Datenelement eine Einheit von Paketen umfasst, wobei der Schritt (a) das schrittweise Senden einer Vielzahl erster Signale umfasst, die jeweils für ein Paket der Paketeinheit repräsentativ sind, wobei der Schritt (b) das Erfassen jedes ersten Lichtsignals durch die optischen Erfassungsmittel (23) und den Wiederherstellungsversuch, durch die Datenverarbeitungsmittel (21) des mobilen Endgeräts (2), jedes Pakets umfasst, wobei das zweite Datenelement eine Liste der nicht wiederhergestellten Pakete oder eine Wiederherstellungsmitteilung aller Pakete ist, und das Verfahren nach Schritt (e), wenn das zweite Datenelement eine Liste mindestens eines Pakets ist, die Wiederholung des Verfahrens für die gelisteten Pakete umfasst.

9. Verfahren nach einem der Ansprüche 1 bis 8, umfassend einen vorherigen Schritt (a0) des Sendens, durch den Blitz (24), eines dritten Lichtsignals, das für eine Sendeanforderung des ersten Datenelements repräsentativ ist, und des Ermittelns, durch die Datenverarbeitungsmittel (11) der Ausrüstung (1), eines inversen Stroms, der von der Leuchtdiode (12) aufgrund der Wirkung des dritten Lichtsignals produziert wurde.

10. Verfahren nach einem der Ansprüche 1 bis 9, wobei die Datenverarbeitungsmittel (11) der Ausrüstung (1) im Bereitschaftsmodus ferner einen abgeschwächten Betrieb mit einem reduzierten Energieverbrauch aufweisen.

11. Verfahren nach einem der Ansprüche 1 bis 10, wobei der Betriebsmodus in den Bereitschaftsmodus wechselt, wenn während einer ersten vorher festgelegten Dauer T2 die an den Klemmen der Leuchtdiode (12) gemessene Spannung höher als der Grenzwert ist, und der Betriebsmodus in den aktiven Modus wechselt, wenn während einer zweiten vorher festgelegten Dauer T3 die an den Klemmen der Leuchtdiode (12) gemessene Spannung niedriger als der Grenzwert ist.

12. Verfahren nach einem der Ansprüche 1 bis 11, wobei der Grenzwert im Laufe der Zeit in Abhängigkeit von den gemessenen Spannungswerten aktualisiert wird.

13. System, umfassend mindestens eine Ausrüstung (1) und ein mobiles Endgerät (2), die ausgelegt sind, um ein Kommunikationsverfahren nach einem der Ansprüche 1 bis 12 über sichtbares Licht durchzuführen.

14. Rechnerprogrammprodukt, umfassend Codebefehle für die Ausführung eines Kommunikationsverfahrens nach einem der Ansprüche 1 bis 12 über sichtbares Licht, wenn es von dem System nach Anspruch 13 ausgeführt wird.

15. Speichermittel, lesbar von einer IT-Ausrüstung, auf welcher ein Rechnerprogrammprodukt Codebefehle für die Ausführung eines Kommunikationsverfahrens nach einem der Ansprüche 1 bis 12 über sichtbares Licht umfasst, wenn es von dem System nach Anspruch 13 ausgeführt wird.

## Claims

1. Method for visible-light communication between equipment (1) comprising data processing means (11) and a light emitting diode (12) and a mobile terminal (2) comprising data processing means (21), optical acquisition means (23) and a flash (24), the method being **characterised in that** it comprises the implementation of steps of:
(a) emission by the light emitting diode (12) of at least one first light signal representing a first data item;
(b) acquisition of said first light signal by the optical acquisition means (23), and reconstitution attempt to reconstitute said first data item by the data processing means (21) of the mobile terminal (2);
(c) generation by the data processing means (21) of the mobile terminal (2) of a second data item according to the result of the reconstitution of the first data item;
(d) emission by the flash (24) of a second light signal representing the second data item;
(e) detection by the data processing means (11) of the equipment (1) of a reverse current produced by the light emitting diode (12) due to said second light signal;
the method comprising the periodic implementation of a cycle of charging the light emitting diode (12), discharging the light emitting diode (12) during a predetermined period, measuring the voltage at the terminals of the light emitting diode (12), and comparing with a threshold; so as to detect said reverse current, said cycle having a variable period, the method comprising the selection of an operating mode between an active mode in which the cycle has a first period T1 allowing acquisition of a light signal, and at least one standby mode wherein the cycle has a second period T0 substantially greater than the first period.

2. Method according to claim 1, wherein the first light signal is acquired at step (b) in the form of an image of the light emitting diode (12), the first data item being reconstituted by analysing the acquired image, by means of a "rolling shutter" effect, the optical acquisition means (23) consisting in particular of a sensor of the complementary metal oxide semiconductor type.

3. Method according to one of claims 1 to 2, wherein the equipment (1) comprises at least one sensor (13) for a physical quantity, step (a) comprising the prior generation of said first data item by the data processing means (11) of the equipment (1) from a measurement of the physical quantity by the sensor (13).

4. Method according to claim 3, wherein the equipment (1) comprises solely, as electronic components, the data processing means (11), the light emitting diode(s) (12), the sensor(s) (13), and electrical supply means.

5. Method according to one of claims 1 to 4, wherein step (e) comprises the reconstitution of said second data item by the data processing means (11) of the equipment (1), steps (c) to (e) being implemented only if the data processing means (21) of the mobile terminal (2) manage to reconstitute the first data item at step (b).

6. Method according to claim 5, wherein
- either step (a) comprises the repetition of the emission of the first signal representing the first data item until step (e) is implemented;
- or step (a) comprises the prior generation of a set of linearly dependent segments from the first data item, and the successive emission of a plurality of first signals each representing a segment of said set of segments until step (e) is implemented, step (b) comprising the acquisition of each first light signal by the optical acquisition means (23), the attempt to reconstitute each segment by the data processing means (21) of the mobile terminal (2), and the reconstruction of said first data item when sufficient segments have been correctly reconstructed.

7. Method according to claim 6, wherein the second data item is a notification of the result of the attempt to reconstitute said first data item at step (b).

8. Method according to claim 7, wherein said first data item comprises a set of packets, step (a) comprising the successive emission of a plurality of first signals, each representing a packet in said set of packets, step (b) comprising the acquisition of each first light signal by the optical acquisition means (23) and the attempt to reconstitute each packet by the data processing means (21) of the mobile terminal (2), the second data item being a list of the non-reconstituted packets or a notification of reconstitution of all the packets, and the method comprising, following step (e), if the second data item is a list of at least one packet, the repetition of the method for the listed packets.

9. Method according to one of claims 1 to 8, comprising a prior step (a0) of emission by the flash (24) of a third light signal representing a request to emit the first data item, and of detection, by the data processing means (11) of the equipment (1), of a reverse current produced by the light emitting diode (12) due to said third light signal.

10. Method according to one of claims 1 to 9, wherein, in standby mode, the data processing means (11) of the equipment (1) also have degraded functioning with reduced energy consumption.

11. Method according to one of claims 1 to 10, wherein the operating mode is changed for standby mode if, during a first predetermined period T2, the voltage measured at the terminals of the light emitting diode (12) is higher than said threshold, and the operating mode is changed for active mode if, during a second predetermined period T3, the voltage measured at the terminals of the light emitting diode (12) is below said threshold.

12. Method according to one of claims 1 to 11, wherein said threshold is updated over time according to the voltage values measured.

13. System comprising at least one item of equipment (1) and a mobile terminal (2) configured to implement the method according to one of claims 1 to 12 for visible-light communication.

14. Computer program product comprising code instructions for executing a method according to one of claims 1 to 12 for visible-light communication, when it is executed by the system of claim 13.

15. Storage means that can be read by computer equipment on which a computer program product comprises code instructions for executing a method according to one of claims 1 to 12 for visible-light communication, when it is executed by the system of claim 13.
